# EUROPÄISCHE PATENTANMELDUNG

(11) **EP 2 208 763 A1**
(43) Veröffentlichungstag der Anmeldung: **21.07.2010**
(21) Anmeldenummer: 09000463.1
(22) Anmeldetag: 15.01.2009
(51) Int. Cl.: C09D 11/00, C09D 11/02

(54) **Komplexester als Lösungsmittel für Druckfarben (III)**

(71) Anmelder: Cognis IP Management GmbH, 49589 Düsseldorf (DE)
(72) Erfinder: Bene, Peter, 50765 Köln (DE); Baro, Juergen, 73732 Esslingen (DE); Röder, Jürgen, 40589 Düsseldorf (DE); Busch, Stefan, 40597 Düsseldorf (DE)

(57) **Zusammenfassung**

Fettsäureester auf Basis von C₆₋₂₆-Fettsäuren und Polyhydroxy-Verbindungen, die ausgewählt sind aus der Gruppe, die gebildet wird von Polyglycerinen und Anlagerungsprodukten von 1 bis 20 mol Ethylen- und/oder Propylenoxid an Polyglycerine, eignen sich als Lösungsmittel für Offset-Druckfarben.

## Beschreibung

### Gebiet der Erfindung

Die Erfindung betrifft die Verwendung von speziellen Komplexestem als Lösungsmittel für Druckfarben.

### Stand der Technik

Zur Zeit gibt es geruchs- und geschmacksarme Offsetdruckfarben welche auf Estern von Fettsäuren und einwertigen Alkoholen basieren. Diese Ester haben jedoch aufgrund ihres relativ geringen Molekulargewichts eine mehr oder weniger ausgeprägte Tendenz zur Migration, was man im Verpackungsbereich nach Möglichkeit vermeiden oder zumindest stark minimieren möchte. Der Verpackungsbereich umfaßt dabei als Verpackungsmaterialien nicht nur Kartonagen sondern auch Kunststofffolien diverser chemischer Zusammensetzungen. Ein spezielles Phänomen bei solchen Folien ist das Swelling, das insbesondere bei dünnen Folien von Bedeutung ist. Dabei handelt es sich um eine irreversible Falten- und Wellenbildung im Material. EP 886, 671 B1 beschreibt Ester von C₆₋₂₂-Fettsäuren und speziellen mehrwertigen Alkoholen (Trimethylolpropan, Pentaerythrit, Dipentaerythrit, Sorbitol und 2-Butyl-2-ethyl-1,3-propandiol) als Lösungsmittel für Offset-Druckfarben.

DE 10 2007 021 131 A1 und DE 10 2007 021 134 A1 beschreiben spezielle Komplexester als Lösungsmittel für Druckfarben.

### Beschreibung der Erfindung

Es besteht ständiger Bedarf an neuen Lösungsmitteln für Offset-Druckfarben. Wie dem Fachmann bekannt, kommt derartigen Lösungsmitteln die Funktion zu, die in den Offset-Druckfarben enthaltenen Harze zu lösen.

Es war die Aufgabe der vorliegenden Erfindung, Lösungsmittel für Offset-Druckfarben zur Verfügung zu stellen.

Diese Lösungsmittel sollten sich durch möglichst geringe Eigenviskosität auszeichnen. Sie sollten ferner ein ausgezeichnetes Lösevermögen für Festharze, die sich für den Offfsetdruck eignen, aufweisen, insbesondere für handelsübliche Offsetdruckfarben-Festharze.

Des weiteren sollten diese Lösungsmittel insbesondere geeignet sein für den Bereich der Lebensmittelverpackungen und sich in dieser Hinsicht vor allem durch geringes Migrations- und Geruchspotential auszeichnen. Sie sollten darüber hinaus swellingarm sein.

Die oben genanten Aufgaben werden in ausgezeichneter Weise gelöst, indem man als Lösungsmittel für Offset-Druckfarben Fettsäureester auf Basis von C₆₋₂₆-Fettsäuren und Polyhydroxy-Verbindungen, die ausgewählt sind aus der Gruppe, die gebildet wird von Polyglycerinen und Anlagerungsprodukten von 1 bis 20 mol Ethylen- und/oder Propylenoxid an Polyglycerine, einsetzt.

Gegenstand der vorliegenden Erfindung ist zunächst die Verwendung von Fettsäureestern auf Basis von C₆₋₂₆-Fettsäuren und Polyhydroxy-Verbindungen, die ausgewählt sind aus der Gruppe, die gebildet wird von Polyglycerinen und Anlagerungsprodukten von 1 bis 20 mol Ethylen- und/oder Propylenoxid an Polyglycerine, als Lösungsmittel für Offset-Druckfarben.

Unter dem Ausdruck "Anlagerungsprodukt von x mol Ethylen- und/oder Propylenoxid an Polyglycerine" sind Anlagerungsprodukte von x mol Ethylen- und/oder Propylenoxid pro 1 mol Polyglycerin zu verstehen.

Die erfindungsgemäß einzusetzenden Fettsäureester können Partialester oder Vollester sein. In einer bevorzugten Ausführungsform handelt es sich um Vollester, d.h. sämtliche OH-Gruppen der den Estern zu Grunde liegenden mehrwertigen Alkohole sind vollständig verestert.

Die Fettsäureester können einzeln oder im Gemisch untereinander eingesetzt werden.

In einer Ausführungsform weisen die erfindungsgemäß einzusetzenden Fettsäureester Viskositäten im Bereich von 50 mPas und 500 mPas (gemessen nach DIN 53299; Viskositätsmessung mit Rotationsviskosimeter bei 23° C) und vorzugsweise im Bereich von 70 bis 150 mPas auf.

In einer Ausführungsform weisen die erfindungsgemäß einzusetzenden Fettsäureester Säurezahlen unterhalb von 10 mg KOH/g und insbesondere unterhalb von 5 mg KOH/g auf.

In einer Ausführungsform weisen die erfindungsgemäß einzusetzenden Fettsäureester Jodzahlen zwischen 0 und 150 auf (gemessen nach DIN 53241).

In einer bevorzugten Ausführungsform setzt man solche Fettsäureester ein, deren Firnis-Viskosität im Bereich von 1000 bis 4000 mPas, vorzugsweise 1500 bis 3000 mPas liegt. Unter Firnis-Viskosität ist dabei die Viskosität zu verstehen, die eine aus 20 Gewichtsteilen des (branchenüblichen) Festharzes Setalin P 7000 (vergleiche den Beispielteil) und 80 Gewichtsteilen des als Lösemittel dienenden Fettsäureesters bei 23 °C aufweist (Messung der Viskosität mittels eines Bohlin Rotationsviskosimeter bei einer Scherrate von 50 s⁻¹ ).

In einer weiteren bevorzugten Ausführungsform setzt man solche Fettsäureester ein, deren Kauributanol-Wert im Bereich von 25 bis 70 und vorzugsweise im Bereich von 30 bis 50 liegt. Dabei ist die Bestimmung des Kauributanolwerts gemäß ASTM D 1133 durchzuführen, wobei das jeweilige Lösemittel gegen eine gesättigte Lösung eines Kauriharzes ("Kauriharz" der Fa. Lamee, Göttingen) in n-Butanol titriert wird. Der Kauributanolwert ist bei 23 °C zu bestimmen.

In einer weiteren bevorzugten Ausführungsform setzt man solche Fettsäureester ein, deren Molgewicht bevorzugt im Bereich von 600 bis 1500 liegt.

Beispiele für geeignete Fettsäuren, die den erfindungsgemäßen Fettsäureestern als Fettsäure-Bausteine zu Grunde liegen, sind die gesättigten Fettsäuren Hexansäure (Capronsäure), Heptansäure, Octansäure (Caprylsäure), Nonansäure (Pelargonsäure), Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure, Oxtadecansäure (Stearinsäure), Nonadecansäure, Eicosansäure (Arachinsäure), Dodecansäure (Behensäure) und die ungesättigten Fettsäuren 10-Undecensäure, Lauroleinsäure, Myristoleinsäure, Palmitoleinsäure, Petroselinsäure, Ölsäure, Elaidinsäure, Linolsäure, Linolensäure, Eläostearinsäure, Gadoleinsäure, Arachidonsäure, Erucasäure, Brassidinsäure. Vorzugsweise werden Fettsäuren natürlichen Ursprungs eingesetzt.

In einer Ausführungsform weisen die Fettsäuren, die den erfindungsgemäßen Fettsäureestern als Fettsäure-Bausteine zu Grunde liegen, 8 bis 18 C-Atome auf.

In einer Ausführungsform wählt man die den erfindungsgemäßen Fettsäureestern als Bausteine zu Grunde liegenden Polyhydroxy-Verbindungen aus den Polyglycerinen. Unter Polyglycerinen sind bekanntlich Kondensationsprodukte des Glycerins zu verstehen. Das einfachste Polyglycerin, welches durch Kondensation von 2 Molekülen Glycerin zustande kommt, ist das Diglycerin, dann folgen im Sinne einer homologen Reihe Triglycerin, Tetraglycerin, usw. Vorzugsweise wählt man den Polyhydroxy-Verbindungs-Baustein der Fettsäureester aus der Gruppe Diglycerin, Triglycerin und Tetraglycerin; dabei sind Diglycerin und Triglycerin als Polyglycerine besonders bevorzugt. In einer besonders bevorzugten Ausführungsform handelt es sich bei dem erfindungsgemäß einzusetzenden Fettsäureester um Diglycerintetracaprylat.

In einer Ausführungsform wählt man die den erfindungsgemäßen Fettsäureestern als Bausteine zu Grunde liegenden Polyhydroxy-Verbindungen aus den Anlagerungsprodukten von 1 bis 20 mol Ethylen- und/oder Propylenoxid an Polyglycerine. Dabei sind die Polyglycerine wie oben beschrieben definiert. Anlagerungsprodukte von 1 bis 20 mol Ethylen- und/oder Propylenoxid an Diglycerin und Triglycerin sind dabei besonders bevorzugt.

Ein weiterer Erfindungsgegenstand sind Offset-Druckfarben, die ein oder mehrere Harze und ein oder mehrere Lösungsmittel enthalten, wobei diese Lösungsmittel für das/die Harz(e) Fettsäureester auf Basis von C₆₋₂₆-Fettsäuren und Polyhydroxy-Verbindungen, die ausgewählt sind aus der Gruppe, die gebildet wird von Polyglycerinen und Anlagerungsprodukten von 1 bis 20 mol Ethylen- und/oder Propylenoxid an Polyglycerine, sind.

In einer bevorzugten Ausführungsform setzt man als Harze solche Harze ein, die im Bereich der Offsetdruckfarben handelsüblich sind.

In einer speziellen Ausführungsform enthalten die Offset-Druckfarben ein kolophoniummodifiziertes Phenolharz (A) und/oder ein Maleinatharz (B) und/oder ein modifiziertes Kohlenwasserstoffharz (C) und/oder einen Kolophoniumharzester (D) und als Lösungsmittel für das/die Harz(e) ein oder mehrere Fettsäureester auf Basis von C₆₋₂₆-Fettsäuren und Polyhydroxy-Verbindungen, die ausgewählt sind aus der Gruppe, die gebildet wird von Polyglycerinen und Anlagerungsprodukten von 1 bis 20 mol Ethylen- und/oder Propylenoxid an Polyglycerine.

In einer bevorzugten Ausführungsform sind die erfindungsgemäßen Offset-Druckfarben vollständig mineralölfrei.

Die erfindungsgemäßen Offset-Druckfarben können über die obligatorischen Bestandteile Harz(e), Lösungsmittel und Farbträger hinaus auch weitere Bestandteile enthalten, insbesondere solche, die dem Fachmann auf diesem Gebiet wohlvertraut sind. Ausdrücklich sei angemerkt, dass Farbträger, insbesondere Pigmente, natürlich obligatorischer Bestandteil von Offset-Druckfarben sind.

Die erfindungsgemäßen Offset-Druckfarben sind vorzugsweise frei von Stoffen mit hohem Migrationspotential. Die in den Bindemitteln der Farben enthaltenen Harze und erfindungsgemäß einzusetzenden Fettsäureester sind so aufeinander abgestimmt, dass der stoffliche Übergang auch im Falle von Primärverpackungen auf Lebensmittel derartig reduziert wird, dass die gesetzlich vorgeschriebenen Grenzwerte deutlich unterschritten werden. Zudem findet bei einem Direktkontakt zwischen der gedruckten Farbe und beispielweise einer Polypropylenverpackungsfolie durch nahezu vollständiges Ausbleiben eines stofflichen Übergangs nahezu keine Dimensionsveränderung statt, also keine Migration in die Kunststoffmatrix (= kein Folien-Swelling).

Die erfindungsgemäßen Offset-Druckfarben können als geruchsarm, migrationsarm und swellingarm bezeichnet werden und sind daher insbesondere für die Herstellung von Lebensmittelverpackungen unter Verwendung von beispielsweise Karton und Papier geeignet.

### Beispiele

### Eingesetzte Substanzen

| | |
|---|---|
| Setalin P 7000 | Kolophoniumharz (Fa. Akzo Nobel Resins) |
| DiglycerinTGI-caprylat | Vollester einer Mischung von 33% Mono-, 33% Di-, 19% Tri- und 15% Tetraglycerin und Caprylsäure (Fa. Cognis Deutschland GmbH) |
| Diglycerin-tetracaprylat | Glycerinester auf Basis von im wesentlichen Diglycerin und Caprylsäure (Fa. Cognis Deutschland GmbH) |
| Texaprint SPOC | Pentaerythritoltetraoctoat |

### Herstellung der Rezepturen

### Allgemeines

Von zentraler Bedeutung für die Herstellung von Offset-Druckfarben-Rezepturen sind die Lösungsmittel. Dabei ist das Lösevermögen der Lösungsmittel ein essentieller Parameter. Dieses Lösevermögen wurde durch Bestimmung des dem Fachmann bekannten Kauributanolwertes bestimmt. Diese Prüfmethode ist unter "Verwendete Prüfmethoden" näher angegeben.

Ein weiterer Parameter zur Definition des Lösevermögens von Fettsäurestern ist die Lösungsviskosität von Firnissen (Lösungen von Festharzen in den Lösungsmitteln). Die hierbei eingesetzte Prüfmethode ist unter "Verwendete Prüfmethoden" näher angegeben.

### Zu den Rezepturen

Die Herstellung der Firnisse geschah wie folgt: Es wurden 20 Gewichtsteile des Festharzes Setalin P 7000 mit 80 Gewichtsteilen des jeweils zu untersuchenden Lösungsmittels versetzt und unter Rühren auf 180-200 °C erhitzt. Dabei wurde eine Lösung des Festharzes im jeweiligen Lösungsmittel erhalten. Diese Lösung wird - gemäß fachüblicher Gepflogenheit - als Firnis bezeichnet.

Die Firnisse wurden durch Bestimmung ihrer Viskosität charakterisiert. Die hierbei eingesetzte Prüfmethode ist unter "Verwendete Prüfmethoden" näher angegeben.

Den Tabellen der Beispiele B1, B2 und V1(Vergleichsbeispiel) ist die Zusammensetzung der Firnisse (Gew.-% der einzelnen Bestandteile bezogen auf den gesamten Firnis) zu entnehmen:

### Verwendete Prüfmethoden

### 1) Lösungsvermögen

Der sogenannte Kauributanol-Wert wird von Experten häufig benutzt um das Lösevermögen für Druckfarbenharze zu bestimmen. Der Kauributanol Wert charakterisiert dabei das Lösevermögen der Lösungsmittel.
Dementsprechend erfolgte die Bestimmung des Lösevermögens durch Messung des Kauributanolwerts gemäß ASTM D 1133. Zur Bestimmung des Kauributanol-Wertes wurde das jeweilige Lösemittel gegen eine gesättigte Lösung eines Kauriharzes ("Kauriharz" der Fa. Lamee, Göttingen) in n-Butanol titriert. Der Kauributanolwert wurde bei 23 °C bestimmt.

### Typische Kauributanol Werte sind:

| | |
|---|---|
| aromatenfreie Mineralöle | ca. 20 |
| aromatenreiche Mineralöle | ca. 40-50 |
| Toluol | ca. 105-110 |

### 2) Lösungsviskosität

Die Viskositätsbestimmung erfolgte gemäß der dem Fachmann bekannten Eurocommitmethode. Dafür wurden 20 Gew.-Teile des Harzes Setalin P 7000 mit 80 Gew.-Teilen der jeweiligen Lösemittelkomponente gemischt, durch Erhitzen auf 180-200°C unter Rühren wurde das Harz gelöst. Anschließend wurde die Lösung (derartige Lösungen werden vom Fachmann als Firnis bezeichnet) auf 23 °C abgekühlt. Danach wurden die Viskositäten der einzelnen Firnisse mit Hilfe eines Bohlin Rotationsviskosimeters ermittelt. Die Werte wurden dabei bei einer Scherrate von 50 s⁻¹ bei 23°C gemessen.

### Beispielrezepturen

### Beispiel 1: Vergleichsbeispiel (V1)

Die Herstellung des Firnisses erfolgte wie oben beschrieben.
Zusammensetzung des Firnisses

| **Firnis** | |
|---|---|
| Setalin P 7000 | 20 |
| Pentaerythrittetraoctoat | 80 |

### Messdaten (gemäß den oben beschriebenen Prüfmethoden):

- Viskosität von Pentaerythrittetraoctoat: 41 mPas
- Molgewicht von Pentaerythrittetraoctoat: 641
- Lösevermögen von Pentaerythrittetraoctoat (Kauributanolwert): 40
- Firnis Vsikosität: 1280 mPas

### Beispiel 2: erfindungsgemäßes Beispiel (B1)

Die Herstellung des Firnisses erfolgte wie oben beschrieben.
Zusammensetzung des Firnisses:

| **Firnis** | |
|---|---|
| Setalin P 7000 | 20 |
| Diglycerin TGI caprylat | 80 |

### Messdaten (gemäß den oben beschriebenen Prüfmethoden):

- Viskosität von Diglycerin TGI caprylat: 79 mPas
- Mittleres Molgewicht von Diglycerin TGI caprylat: 720
- Lösevermögen von Diglycerin TGI caprylat (Kauributanolwert): 38
- Firnisviskosität: 1600 mPas

### Beispiel 3: erfindungsgemäßes Beispiel (B2)

Die Herstellung des Firnisses erfolgte wie oben beschrieben.
Zusammensetzung des Firnisses:

| **Firnis** | |
|---|---|
| Setalin P 7000 | 20 |
| Diglycerintetracaprylat | 80 |

### Messdaten (gemäß den oben beschriebenen Prüfmethoden):

- Viskosität von Diglycerin tetracaprylat: ca. 60 mPas
- Molgewicht von Diglycerintetracaprylat: ca 690
- Lösevermögen von Diglycerintetracaprylat (Kauributanolwert): 44
- Firnisviskosität: 1750 mPas

### Übersicht der Messdaten

Die oben bereits angegebenen Messdaten sind der besseren Übersicht halber nachfolgend noch einmal in Tabellenform zusammengestellt:
**Lösungsviskositäten der Firnisse**

| siehe Beispiel | Firnis auf Basis des Lösungsmittels | Viskosität |
|---|---|---|
| V1 | Pentaerythrittetraoctoat | 1280 mPas |
| B1 | DiglycerinTGI caprylat | 1600 mPas |
| B2 | Diglycerin tetracaprylat | 1750 mPas |

**Lösungsvermögen der Lösungsmittel**

| Lösungsmittel | Kauributanolwert |
|---|---|
| Pentaerythrittetraoctoat: | 40 |
| Diglycerin TGI caprylat | 38 |
| Diglycerin tetracaprylat | 44 |

## Patentansprüche

1. Verwendung von Fettsäureestern auf Basis von C₆₋₂₆-Fettsäuren und Polyhydroxy-Verbindungen, die ausgewählt sind aus der Gruppe, die gebildet wird von Polyglycerinen und Anlagerungsprodukten von 1 bis 20 mol Ethylen- und/oder Propylenoxid an Polyglycerine, als Lösungsmittel für Offset-Druckfarben.

2. Verwendung nach Anspruch 1, wobei es sich bei den Fettsäureestern um Vollester handelt.

3. Verwendung nach Anspruch 1 oder 2, wobei man als Fettsäurebaustein der Ester native Fettsäuren mit 8 bis 18 C-Atomen einsetzt.

4. Verwendung nach einem der Ansprüche 1 bis 3, wobei man als Polyhydroxy-Verbindungs-Baustein der Fettsäureester auswählt aus der Gruppe Diglycerin, Triglycerin und Tetraglycerin.

5. Verwendung nach einem der Ansprüche 1 bis 3, wobei man als Polyhydroxy-Verbindungs-Baustein der Fettsäureester Diglycerin und/oder Triglycerin einsetzt.

6. Verwendung nach Anspruch 1, wobei man als Fettsäureester Diglycerintetracaprylat einsetzt.

7. Offset-Druckfarben, enthaltend ein oder mehrere Harze und ein oder mehrere Lösungsmittel, **dadurch gekennzeichnet, dass** die Lösungsmittel für das/die Harz(e) Fettsäureester auf Basis von C₆₋₂₆-Fettsäuren und Polyhydroxy-Verbindungen, die ausgewählt sind aus der Gruppe, die gebildet wird von Polyglycerinen und Anlagerungsprodukten von 1 bis 20 mol Ethylen- und/oder Propylenoxid an Polyglycerine, sind.

8. Offset-Druckfarben nach Anspruch 6, wobei die Druckfarben als Harze ein kolophoniummodifiziertes Phenolharz (A) und/oder ein Maleinatharz (B) und/oder ein modifiziertes Kohlenwasserstoffharz (C) und/oder einen Kolophoniumharzester (D) enthalten.

9. Offset-Druckfarben nach Anspruch 6 oder 7, wobei es sich bei den Fettsäureestern um Vollester handelt.
